# EUROPEAN PATENT APPLICATION

(11) **EP 2 883 666 A1**
(43) Date of publication of application: **17.06.2015**
(21) Application number: 13196982.6
(22) Date of filing: 12.12.2013
(51) Int. Cl.: B25J 11/00

(54) **Apparatus and related systems and methods for processing molded parts and similar items**

(71) Applicant: Brewer, Balda C., Anaheim, CA 92806 (US)
(72) Inventor: Brewer, Michael A, Irvine, CA California 92606 (US); Riddle, James B, Foothill Ranch, CA California 92610 (US)
(74) Representative: Dennemeyer & Associates S.A.

(57) **Abstract**

Methods and apparatus are disclosed for using multi-axis articulating robot (12) to manipulate plastic molded parts through a series of processing steps on one or more processing machines (14, 16, 18) that are relatively stationary with respect to the parts and/or the robot.

## Description

### FIELD OF THE INVENTION

The present invention relates to plastic molded parts and similar items, and to apparatus and methods for processing same through various steps such as cutting, sanding, buffing, etc. The system can be used in a wide variety of situations and applications, with substantial benefits as compared to prior art systems and methods.

### BACKGROUND OF THE INVENTION

The present invention is described herein with reference to the accompanying Figures, which serve as illustrations of some of the many embodiments in which the invention may be practiced. Subject to the context and other factors (including for example the understanding of persons of ordinary skill in the arts relevant to the inventions), generally in those Figures and references similar reference numerals refer to similar or identical elements throughout this description.

Those Figures and references, and the other terminology used in these descriptions, are not intended to be interpreted in any limited or restrictive manner, simply because they are being utilized in conjunction with a detailed description of certain embodiments of the invention. Furthermore, various embodiments of the invention (whether or not specifically described herein) may include one or more of the novel features disclosed herein, no single one of which (a) is necessarily solely responsible for any particular desirable attribute(s) of the inventions or (b) is essential to practicing the inventions described.

For the purpose of summarizing the invention certain objects and advantages have been described herein. It is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

These and other embodiments will become readily apparent to those skilled in the art from the following detailed description of the preferred embodiments having reference to the attached figures, the invention not being limited to any particular preferred embodiment(s) disclosed.

### BRIEF DESCRIPTION OF THE DRAWINGS

| *Figure* | *Description* |
|---|---|
| Fig. 1 | Isometric view of one embodiment of the invention. |
| Fig. 1A | Top view of the embodiment illustrated in Fig. 1, but with the robot arm in a different position. |
| Fig. 1B | Isometric view of the embodiment of Fig. 1A. |
| Fig. 1C | Side elevation view of the embodiment of Fig. 1A. |
| Fig. 1D | Front elevation view of the embodiment of Fig. 1A. |
| Figs. 2A-D | Top, front elevation, side elevation, and isometric views of one embodiment of a sander assembly 16 (of Figs. 1 and/or 1A-D) as it may be incorporated into the invention |
| Fig. 3A-D | Top, front elevation, side elevation, and isometric views of the embodiment of Fig. 1 (similar to Figs. 1A-D but showing the robot positioned as in Fig. 1), illustrating the step of sanding a part. |
| Fig. 4A-D | Top, front elevation, side elevation, and isometric views of the embodiment of Fig. 1 (similar to Figs. 1A-D but showing the robot positioned as in Fig. 1), but illustrating the step of polishing or buffing a part. |
| Fig. 5 | Isometric view similar to that shown in Fig. 1B, but from a different perspective. |
| 6A | One of the many alternative embodiments of the invention, in which stations have been added to feed parts to the robot, nip gate/flashing elements from the part, and convey the finished/sanded parts away from the robot to the next stage of processing |
| 6B | Similar to Fig. 6A, but shown in black-and-white |
| 7 | Molded part (eyeglasses frame) with gate/flashing/runner, before being processed by the robot/stations. |
| 8 | This pneumatic slide presents the molded part to the robot within the safety enclosure/zone; the part can be loaded onto the slide by a human operator (hand loaded) or by automated or other suitable means (not shown). |
| 9 | Pneumatic gripper holding molded part. One embodiment of a robot's EOAT (end of arm tool), holding the part at a nipper station after picking it up from the "nest," and before moving the part to a pre-sanding station. |
| 10A and 10B | At nipper station, after picking the part from the nest and prior to pre-sanding. |
| 11 | Similar to Fig. 7, but showing a close-up view of the part, and particularly a typical remainder of a gate after nipping and before sanding operations. |
| 12A-12C | These illustrate the robot with the part positioned at a pre-sanding station/operation (these figures also are typical of the next two stations, for sanding and buffing). Figs. 12B and 12C illustrate some of the many positions and movements for which the robot can be programmed, to manipulate the part in a desired manner with respect to the sander/buffer/etc. In 12B and 12C, a generally vertical robotic motion manipulates the part in relation to a rotating sanding belt. As indicated above, similar approaches can be used for pre-sanding, sanding, and buffing stations. |
| 13 | Similar to Fig. 7, but showing the part with gate removed and sanded smooth. |
| 14 | Custom conveyor for presenting completed parts to operator after being dropped off by robot. |
| 15 | Completed part being placed onto conveyor for return to operator. |
| 16 | Side elevation view of a buffing station having a vacuum system 32 as it may be incorporated into the invention |
| 17 | Side elevation view of a sanding station having a sprayer 34 as it may be incorporated into the invention |

### DETAILED DESCRIPTION OF EMBODIMENTS

As indicated above, the inventions disclosed herein can be used in a broad range of applications and provide many benefits. Although the majority of this description is directed to embodiments relating to cutting, sanding, and buffing plastic-molded parts, persons of ordinary skill in the art will understand that it also may be used to perform other processing and used for other parts than those discussed.

Broadly, one embodiment of the invention uses a multi-axis articulating robot to manipulate plastic molded parts through a series of cutting, sanding, and buffing operations. Preferably, the robot is capable of moving the parts relative to a processing machine rather than (a) the processing machine moving around the part or (b) the robot just moving the part from point A to point B. However, persons of ordinary skill in the art will understand that embodiments may be provided and used within the scope of the invention wherein the machine moves around stationary/fixed parts, and/or in which a combination of those approaches is used (one or more of the particular processing machines performing actions on the subject part moves or otherwise changes location relative to the part, and/or the parts being processed are moved by one or more robots relative to the processing machine(s)).

Among other things, such steps can be used to remove excess gate vestige and leave a finished surface meeting selected cosmetic standards. Persons of ordinary skill in the art also will understand that, for certain embodiments, the steps are not limited to removing gate vestige or other excess material on the part(s) for cosmetic reasons, but may serve a wide variety of functions, including without limitation sanding, buffing or other polishing, ensuring proper functioning of the part(s), assembly of pieces, applying coating(s) and/or other treatments to the part(s), etc.

Preferably, nipping helps to ensure that a uniform size/length of "gate" vestige material is left on the part as the robot then moves the "nipped" part to the next station (for sanding, etc.). In some applications in which the invention may be used, some parts may require a relatively "sanded" finish, while other parts may require an additional buffing step to provide a more "polished" surface finish.

Preferably, the processes of the invention are automatically sequenced by the combination of a robot controller (not shown) interfacing with a PLC (programmable logic controller) work cell such as the 6-axis arm 12 and other components illustrated in the drawings. In some embodiments, a human operator may load and receive/unload the part(s) to and from the remote end of the robot arm 12, but persons of ordinary skill in the art will understand that those and other steps also can be automated and/or otherwise accomplished without human involvement. Further, persons of ordinary skill in the art will appreciate that multiple units may be run by a single human operator (i.e., human loads unit 1, then unit 2, then unit 3, etc.), and each unit may be for a different "line" of products. For example, different units may contain specific sizes of products or specific shapes of products. Even further, each unit can be programmed to handle a wide variety of different parts/configurations rather than being specialized to just one configuration.

The system itself may be provided on a table top, the floor, wall, or other known stable surface. Persons of ordinary skill in the art will understand that the rectangular area depicted in the drawings may be a table top, or safe area boundary marked on the floor around the robot in order to designate an area within which humans should stay out of in order to avoid potential injury by the moving parts of the system.

Also preferably, the system is at least relatively modular and/or otherwise customizable. In that regard, the particular units 14, 16, and 18 in the drawings can be in any position and "order" relative to each other, although preferably they all are within the operable range of the robotic arm 12, so that a part held at the end of that arm 12 can be processed at each station if needed. Preferably, the system provides and enables precision and repeatability in processing (i.e., sanding/buffing/etc.). For example, the system is capable of monitoring the level of sanding - making sure not to over sand a product; wherein over sanding may unintentionally "nick" the plastic by not orienting it properly to the sanding belt, etc.

The selection of processing machinery (such as illustrated as polisher/buffer 14, sander 16, and pre-sander 18) likewise can include additional, fewer, and or different devices than those shown in the drawings. For example, a vacuum system 32 may be incorporated into a buffing station in order to remove any undesired dust and/or debris from the system, including debris that accumulates as a result of the buffing process. Further, a sanding device having a spray system 34 may be provided to maintain a desired sanding roughness on the belts of the system by keeping the belts lubricated to maintain a desired degree of abrasiveness on the belts.

The various processing machinery can be designed to process only a single type of part, and/or can include sufficient hardware/stations and/or programming software routines to be usable for producing a variety of parts. Persons of ordinary skill in the art will understand that, for any given arrangement of hardware, a plurality of different parts may be processed, and some or each type of different part may have its own custom software routine (so that the part is properly positioned, moved, etc.). Likewise, any given software routine may use less than all of the various hardware stations (such as devices 14, 16, and/or 18) within a given embodiment of the invention, may use one or more of the stations repeatedly, and/or may use a given set of stations in a variety of different routines (order of steps, movement of the part a given each station, length of time at a given station, etc.). Said another way, persons of ordinary skill in the art will understand that a wide variety of hardware configurations and software routines can be used to practice the invention. Also, although full automation is preferred in certain embodiments (for purposes of efficiency, throughput, quality control, and/or other purposes), other applications and embodiments of the invention may involve one or more "manual" steps interspersed within an otherwise "automated" process.

In certain embodiments of the invention, the various stations/units can be custom built (although other embodiments may use "off-the-shelf" stations or units, and/or a hybrid or mix of such approaches). Examples include sanding and buffing units 14, 16, and 18, and can further include (among other features on these and/or other units):
- variable frequency drive motors for speed control
- self-centering pulleys (for consistent belt position control and/or other benefits)
- pneumatically controlled belt tensioning units for consistent belt tensioning

In certain embodiments, a main sanding unit 16 incorporates a servo proportioning air pressure regulator that varies the belt tension upon command from the robot. The controller preferably coordinates any such variation with corresponding variations in the motion sequence, to help assure consistent results (so that the finished parts meet designated specifications). In some embodiments, a pneumatic brake assembly can be provided with units such as 14, 16, and 18, to slow, limit, and/or prevent the belt from rotating during certain parts of the automated processing cycle.

In certain embodiments of the invention, the operation sequence can include a preferred series of steps such as the following example:
- Human operator loads molded part onto holding nest (not shown). Preferably, the holding nest fixture is mounted on a pneumatic slide, to facilitate ease and safety of loading/unloading
- The operator presses a start button or otherwise initiates the automated cycle
- The system moves the holding nest fixture (and the loaded part(s)) within reach of the robot arm 12. In certain embodiments, all subsequent processing actions can occur within a "safety guarded" work space, so that humans do not have to be near the processing units such as 14, 16, and 18. In other words, some or all of the "robot" area and associated stations/units can be cordoned off from other adjacent areas, so that humans are not permitted in those "safety" areas during normal operation of such embodiments
- The robot uses pneumatic grippers (at the end of the robot arm 12) to pick a part or parts from the holding nest
- The robot moves the part to a pneumatic nipper station (not shown) and actuates the part in coordination with the nipper unit to remove likely/potential/actual runners from the part. Persons of ordinary skill in the art will understand that, for this and similar processing apparatus and steps, the presence and/or location of actual or potential runners or other excess gate materials (overflow from injection molding or other earlier manufacturing steps) can be determined by any suitable process, including without limitation statistically, by design analysis, by visual or other automated sensors, by human observation, etc.
- The robot moves the part to the Pre-Sanding unit/station, and at the station rotates and/or otherwise moves the part so that the pre-sander 18 removes the majority of any gate remnant on the part. Persons of ordinary skill in the art will understand that this step (as with many of the other of the steps discussed in this example) is yet another of the many stations/units/steps in which automated sensors may be utilized to determine whether and where any such gate remnant(s) exist, and/or to otherwise determine the need for such further processing within each such step and/or guide and focus the action within each such step
- The robot similarly moves the part to and processes the part through the Sanding unit 16, to remove the balance of the gate vestige and/or blend in the cosmetic finish of the part
- If the part is to be polished, the system 10 then similarly processes the part through the Buffing unit 14 to obtain the polished surface. Preferably, a buffing compound or other similar material is automatically applied to the part (or a portion of the part) in connection with the processing at station 14. Persons of ordinary skill in the art will understand that this application of buffing compound can be achieved in any suitable manner, including for example via a pneumatic slide system
- Upon completion of these and/or any further steps, the robot preferably places the completed part onto a small conveyor to present the part to the operator for any further processing (such as cleaning, packaging, etc.). Persons of ordinary skill in the art will understand that other embodiments may include a wide variety of other steps, including further automated processing without further operator involvement (and/or with any such further operator involvement postponed to some point further downstream in the process)

Persons of ordinary skill in the art will understand that the stations/units described herein are illustrative and are not to be taken as delimiting as to the types or nature of apparatus and/or steps with which the invention may be practiced. For example, other embodiments may include apparatus and/or steps to periodically clean the processed part(s), such as a de-ionizer, air blower, or the like.

As indicated above, certain embodiments (not shown) can include cameras, bar-code scanners, gauges, or other sensors to monitor virtually all of the various stations, product status/condition, procedures, etc. By way of example, one or more barcode or other computer-readable indicia can be included on an incoming "tray" holding a product (or on the product/part itself), and the system can include a scanner to read same and use that information to set the robot/system to a prescribed program for that part. In more complex embodiments, a plurality of different robot station/unit clusters 10 can be provided, and human or automated processing can be used to direct a given part to a desired one or more of such clusters for desired processing of the part(s). Such embodiments can enable increased flexibility in a given assembly/processing line (to, for example, be able to process different kinds of parts through a single processing line), can address "bottlenecks" within a given processing line (by providing duplicative sets of processing for steps that otherwise would slow the overall product flow), etc.

Other of the many examples of such further automation include visual sensors to confirm that desired smoothness has been achieved at a given sanding/buffing station, heat sensors to monitor the condition of a sanding belt (so that the system/control unit/processor memory) cam use that information to adjust the speed of the belt (or issue a warning that the belt needs service/replacement, or actuate the spray dispenser to help condition the belt and extend its useful life and accuracy during use), etc. Yet another example is a robot having one or more pressure sensors to (for example) monitor and control how much pressure is being exerted on a part against the sander. One or more part sensors can be included at appropriate locations within a given embodiment of the invention, to confirm the presence of the part (and/or that it is the appropriate part for the upcoming processing steps).

Further examples of the many ways that automation that can be included within various embodiments of the invention include tracking unit cycles for some or all of the assemblies 10 and/or the individual stations/units. Among other things, such cycle counts can be used to assist in belt-changing frequency and/or other maintenance of the system 10 and/or the individual stations/units.

Persons of ordinary skill in the art will understand that all and/or any subset of the various parts of the system can be monitored and/or controlled by computer or similar automatic processing and handling. In more comprehensive systems, an order can be received digitally from a customer, the control system can assemble and/or actuate the proper/necessary molds (if finished product and/or parts are not already in inventory), run the requested quantity through injection molding and/or other programmed processing steps (including those described herein and/or others), up to and including assembly, packing, and delivery to a shipping dock.

Although the methods or processes of the present invention are illustrated herein with steps occurring in a certain order, the specific order of the steps, or any continuation or interruption between steps, is not required.

The apparatus and methods of the present invention have been described with some particularity, but the specific designs, constructions and steps disclosed are not to be taken as delimiting of the invention. Obvious modifications will make themselves apparent to those of ordinary skill in the art, all of which will not depart from the essence of the invention and all such changes and modifications are intended to be encompassed within the appended claims.

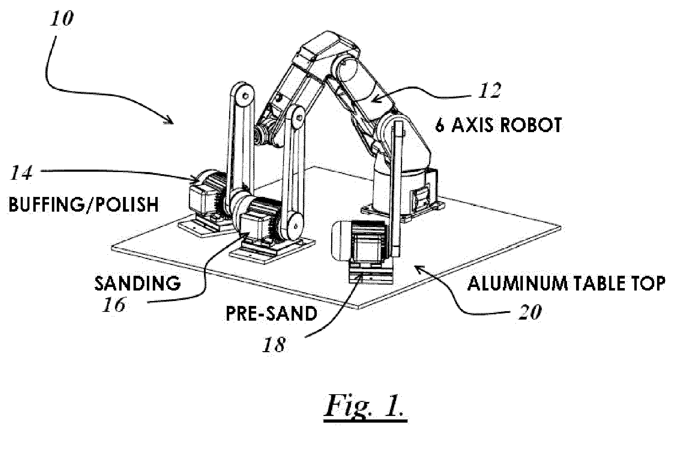

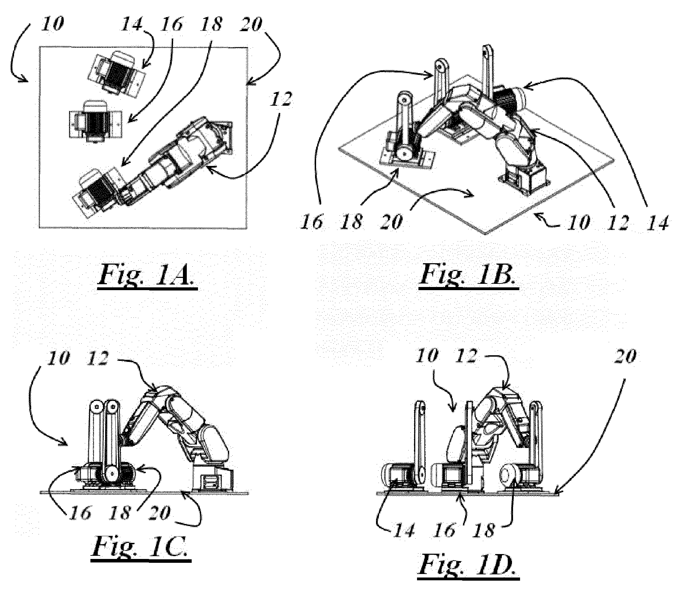

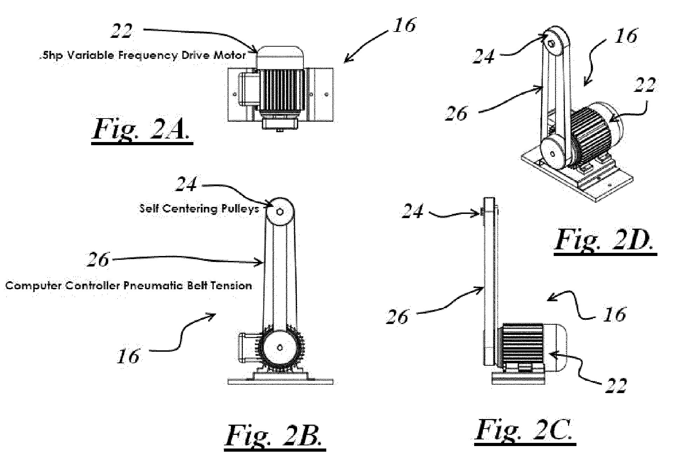

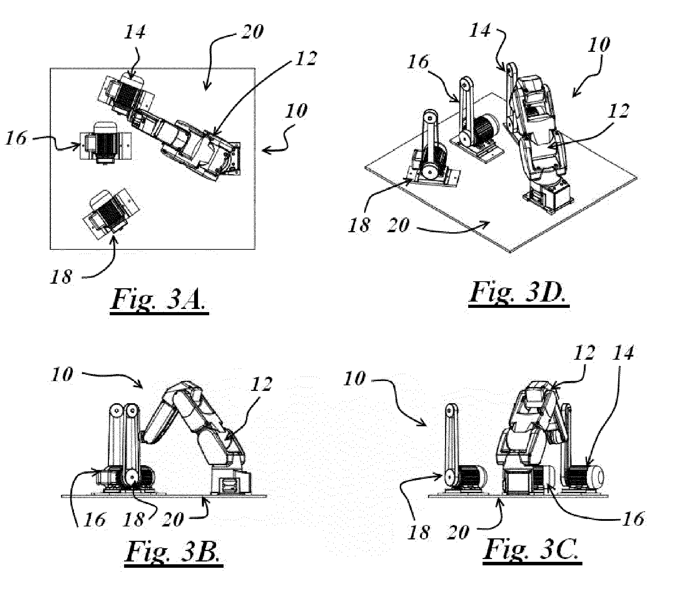

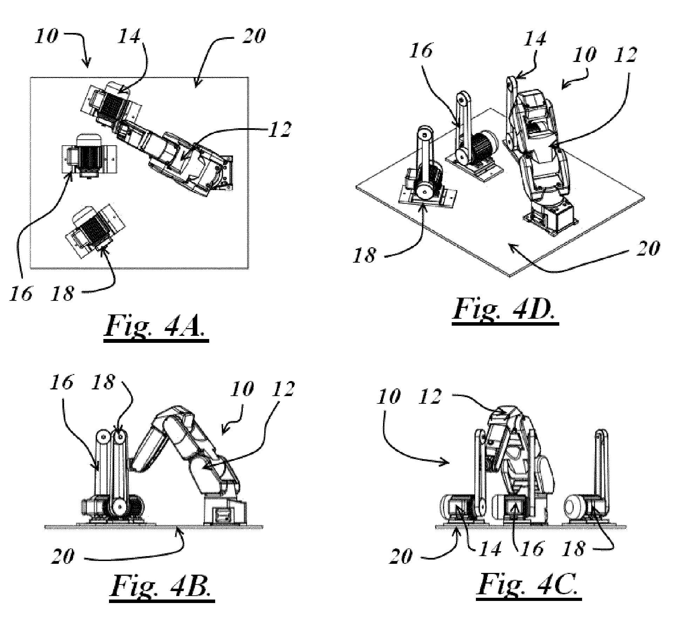

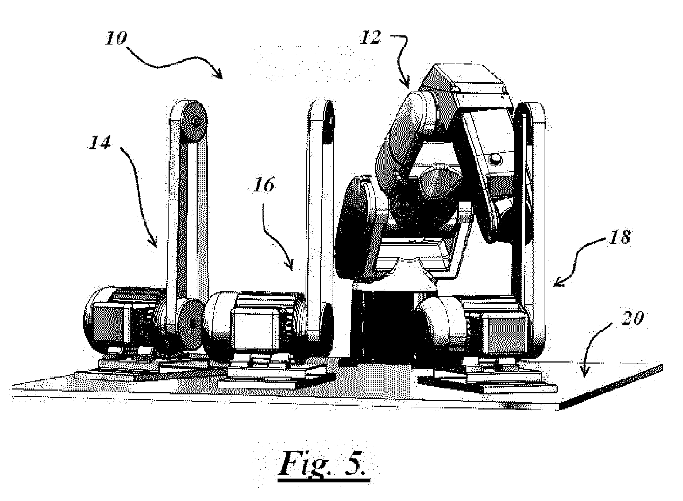

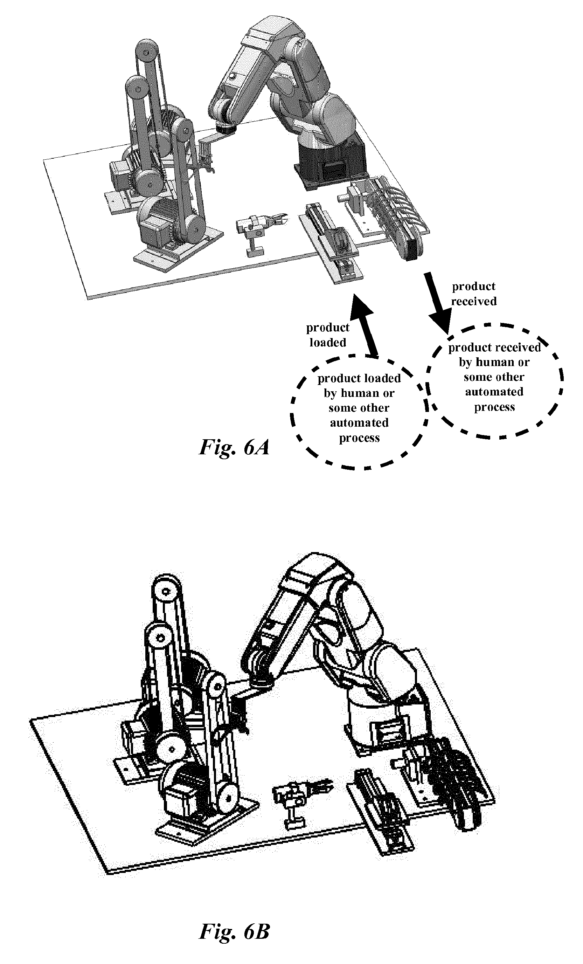

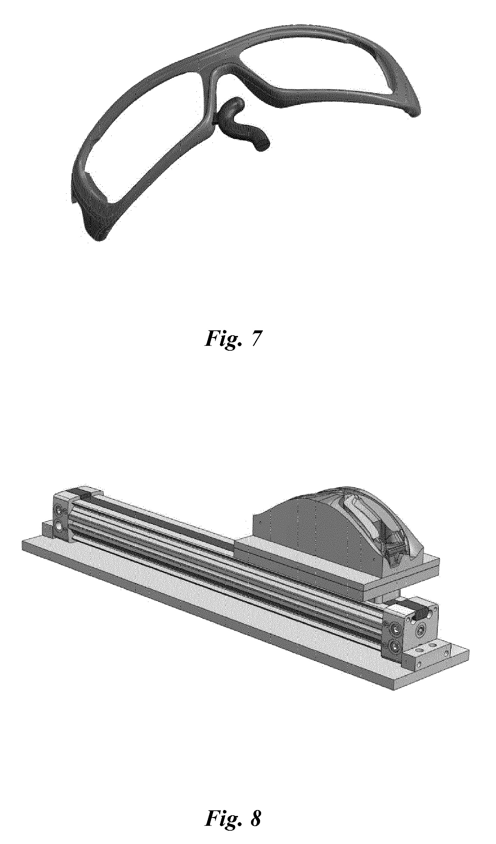

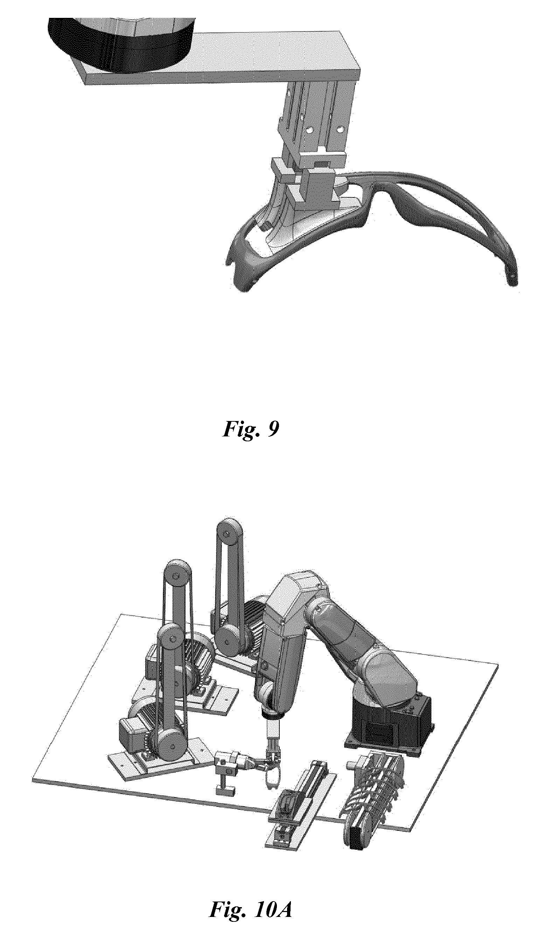

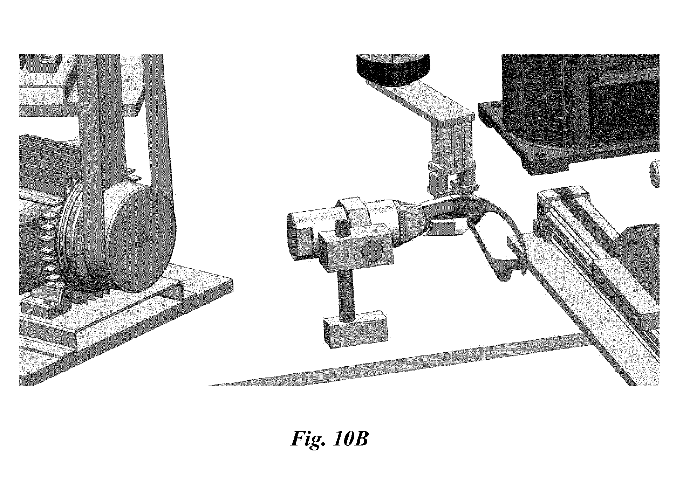

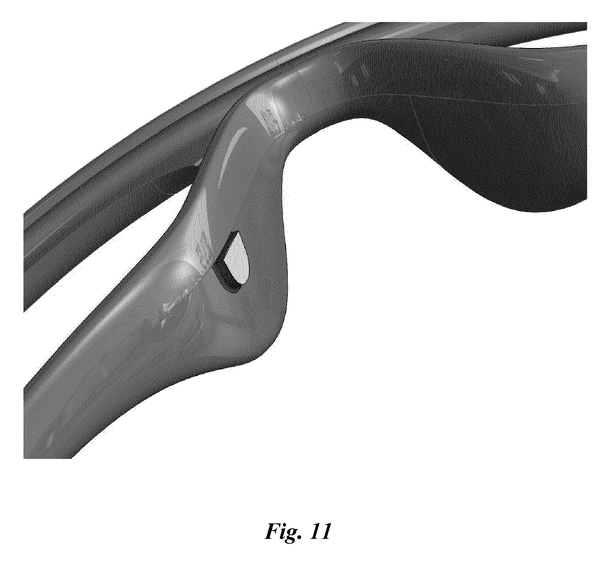

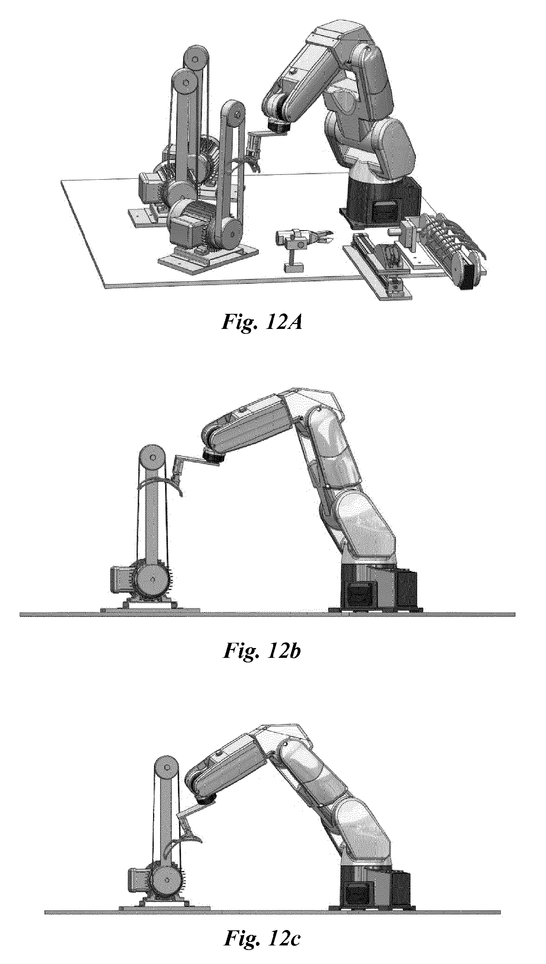

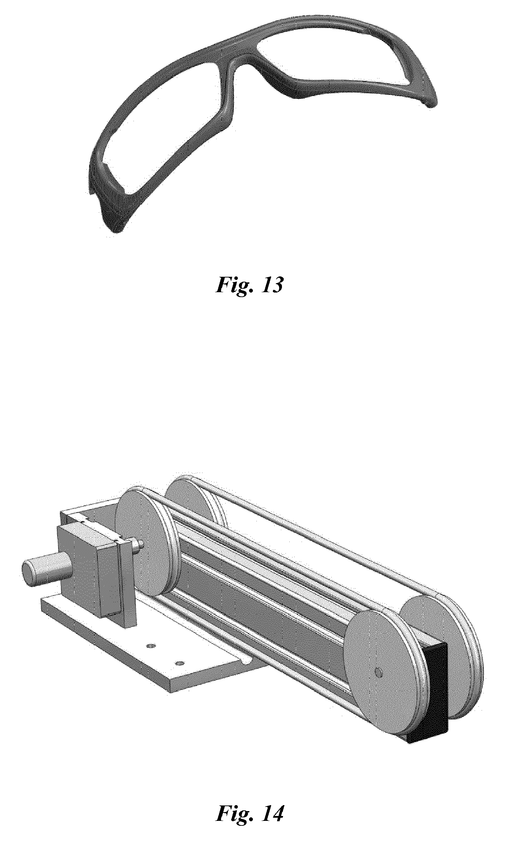

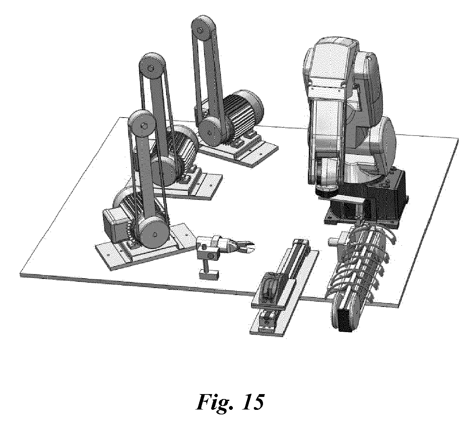

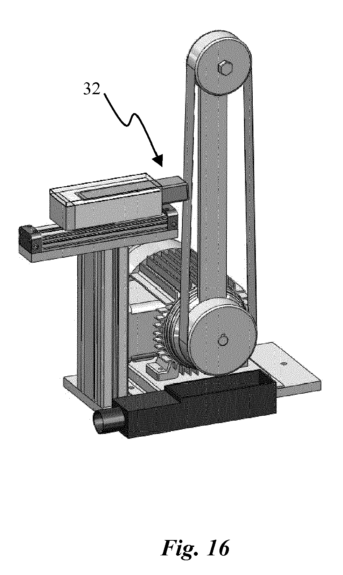

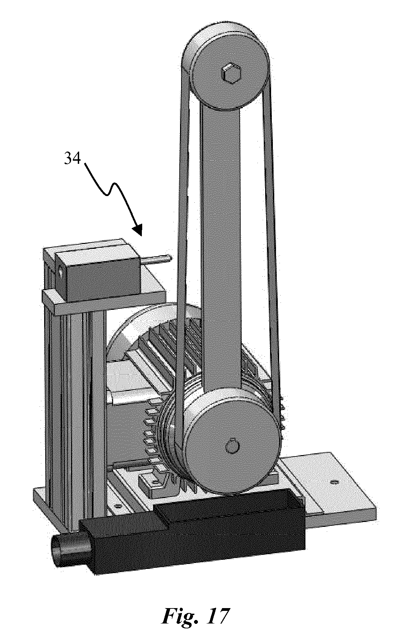

## Claims

1. Apparatus for fabricating injection-molded parts, including:
a multi-axis articulating robot;
at least one processing station positioned within the range of motion of the robot;
a central processor for executing a program controlling the interaction between the robot and the at least one processing station.

2. The apparatus of Claim 1, in which the processing station is relatively stationary and the robot's multi-axis articulating action can move the part with respect to the processing station, said motion of the part being controlled by the program.

3. The apparatus of Claim 1 or Claim 2, including a plurality of said processing stations.

4. A method of fabricating injection-molded parts, including the steps of:
providing the apparatus of Claim 1;
operating the apparatus of Claim 1 using the program.
